(19) **Europäisches Patentamt**
**European Patent Office**
**Office européen des brevets**

(11) **EP 2 193 503 B1**

(12) **EUROPEAN PATENT SPECIFICATION**

(45) Date of publication and mention
of the grant of the patent:
**18.01.2012 Bulletin 2012/03**

(51) Int Cl.:
***G06T 17/05*** (2011.01)

(21) Application number: **08831719.3**

(22) Date of filing: **18.09.2008**

(86) International application number:
**PCT/US2008/076853**

(87) International publication number:
**WO 2009/039275 (26.03.2009 Gazette 2009/13)**

(54) **GEOSPATIAL MODELING SYSTEM PROVIDING WAVELET DECOMPOSITION AND INPAINTING FEATURES AND RELATED METHODS**

GEOMODELLIERUNGSSYSTEM MIT FUNKTIONEN FÜR WAVELET-ZERLEGUNG UND INPAINTING SOWIE ENTSPRECHENDE VERFAHREN

SYSTÈME DE MODÉLISATION GÉOSPATIALE FOURNISSANT UNE DÉCOMPOSITION EN ONDELETTES ET DES CARACTÉRISTIQUES DE RETOUCHE, ET PROCÉDÉS ASSOCIÉS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.09.2007 US 858255**

(43) Date of publication of application:
**09.06.2010 Bulletin 2010/23**

(73) Proprietor: **Harris Corporation**
**Melbourne FL 32919 (US)**

(72) Inventors:
• **ALLEN, Josef De Vaughn**
**Melbourne, Florida 32935 (US)**
• **RAHMES, Mark**
**Melbourne, Florida 32940 (US)**
• **TENALI, Gnana Bhaskar**
**West Melbourne, Florida 32904 (US)**
• **GANTHIER, Emile**
**Palm Bay, Florida 32907 (US)**

(74) Representative: **Schmidt, Steffen et al**
**Wuesthoff & Wuesthoff**
**Patent- und Rechtsanwälte**
**Schweigerstrasse 2**
**81541 München (DE)**

(56) References cited:
• **MARK RAHMES ET AL: "Topography preserving non-linear autonomous inpainting for bare earth DEM reconstruction", MAPPS/ASPRS 2006 FALL CONFERENCE NOVEMBER 6-10, SAN ANTONIO TEXAS,, 6 November 2006 (2006-11-06), page 9PP, XP009123863,**
• **BERTALMIO M ET AL: "IMAGE INPAINTING", COMPUTER GRAPHICS. SIGGRAPH 2000 CONFERENCE PROCEEDINGS. NEW ORLEANS, LA, JULY 23 - 28, 2000; [COMPUTER GRAPHICS PROCEEDINGS. SIGGRAPH], NEW YORK, NY : ACM, US, 23 July 2000 (2000-07-23), pages 417-424, XP001003582, ISBN: 978-1-58113-208-3**
• **BOSSER L ET AL: "Reconstruction of Sparse Bandwidth by Regularization Method in SAR Imagery", RADAR, 2006 IEEE CONFERENCE ON APRIL 2006, PISCATAWAY, NJ, USA,IEEE, PISCATAWAY, NJ, USA, 1 April 2006 (2006-04-01), pages 342-349, XP010918458, DOI: DOI:10.1109/RADAR.2006.1631822 ISBN: 978-0-7803-9496-4**
• **GU J ET AL: "Metal artifacts reduction in CT images through Euler's elastica and curvature based sinogram inpainting", PROCEEDINGS OF THE INTERNATIONAL SOCIETY FOR OPTICAL ENGINEERING (SPIE), SPIE, USA, vol. 6144 III, 13 February 2006 (2006-02-13), pages 614465-1, XP002518900, ISSN: 0277-786X, DOI: DOI: 10.1117/12.650137**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 193 503 B1**

**(Cont. next page)**

• PATWARDHAN K A ET AL: "Projection based image and video inpainting using wavelets", PROCEEDINGS 2003 INTERNATIONAL CONFERENCE ON IMAGE PROCESSING (CAT. NO.03CH37429), BARCELONA, SPAIN, 14-17 SEPT. 2003; [INTERNATIONAL CONFERENCE ON IMAGE PROCESSING], IEEE PISCATAWAY, NJ, USA, vol. 1, 14 September 2003 (2003-09-14), pages 857-860, XP010670125, ISBN: 978-0-7803-7750-9

**Description**

The present invention relates to the field of data modeling, and, more particularly, to modeling systems such as geospatial modeling systems and related methods.

Topographical models of geographical areas may be used for many applications. For example, topographical models may be used in flight simulators and for planning military missions. Furthermore, topographical models of man-made structures (e.g., cities) may be extremely helpful in applications such as cellular antenna placement, urban planning, disaster preparedness and analysis, and mapping, for example.

Various types and methods for making topographical models are presently being used. One common topographical model is the digital elevation map (DEM) . A DEM is a sampled matrix representation of a geographical area which may be generated in an automated fashion by a computer. In a DEM, coordinate points are made to correspond with a height value. DEMs are typically used for modeling terrain where the transitions between different elevations (e.g., valleys, mountains, etc.) are generally smooth from one to a next. That is, DEMs typically model terrain as a plurality of curved surfaces and any discontinuities therebetween are thus "smoothed" over. Thus, in a typical DEM no distinct objects are present on the terrain.

One particularly advantageous 3D site modeling product is RealSite® which is a software plugin in Harris' Multi-image exploitation tool from the present Assignee Harris Corp. RealSite® may be used to register overlapping images of a geographical area of interest, and extract high resolution DEMs using stereo and nadir view techniques. RealSite® provides a semi-automated process for making three-dimensional (3D) topographical models of geographical areas, including cities, that have accurate textures and structure boundaries. Moreover, RealSite® models are geospatially accurate. That is, the location of any given point within the model corresponds to an actual location in the geographical area with very high accuracy. The data used to generate RealSite® models may include aerial and satellite photography, electro-optical, infrared, and light detection and ranging (LIDAR), for example. Another similar system from Harris Corp. is LiteSite®. LiteSite® models provide automatic extraction of ground, foliage, and urban digital elevation models (DEMs) from LIDAR and IFSAR imagery. LiteSite® can be used to produce affordable, geospatially accurate, high-resolution 3-D models of buildings and terrain.

U.S. Patent No. 6,654,690 to Rahmes et al., which is also assigned to the present Assignee , discloses an automated method for making a topographical model of an area including terrain and buildings thereon based upon randomly spaced data of elevation versus position. The method includes processing the randomly spaced data to generate gridded data of elevation versus position conforming to a predetermined position grid, processing the gridded data to distinguish building data from terrain data, and performing polygon extraction for the building data to make the topographical model of the area including terrain and buildings thereon.

In many instances there will be voids or gaps in the data used to generate a geospatial or other model. The voids negatively affect the quality of the resulting model, and thus it is desirable to compensate for these voids while processing the data, if possible. Various interpolation techniques are generally used for filling in missing data in a data field. One such technique is sinc interpolation, which assumes that a signal is bandlimited. While this approach is well suited for communication and audio signals, it may not be well suited for 3D data models. Another approach is polynomial interpolation. This approach is sometimes difficult to implement because the computational overhead may become overly burdensome for higher order polynomials, which may be necessary to provide desired accuracy.

One additional interpolation approach is spline interpolation. While this approach may provide a relatively high reconstruction accuracy, this approach may be problematic to implement in a 3D data model because of the difficulty in solving a global spline over the entire model, and because the required matrices may be ill-conditioned. One further drawback of such conventional techniques is that they tend to blur edge content, which may be a significant problem in a 3D topographical model.

Another approach for filling in regions within an image is set forth in U.S. Patent No. 6,987,520 to Criminisi et al. This patent discloses an exemplar-based filling system which identifies appropriate filling material to replace a destination region in an image and fills the destination region using this material. This is done to alleviate or minimize the amount of manual editing required to fill a destination region in an image. Tiles of image data are "borrowed" from the proximity of the destination region or some other source to generate new image data to fill in the region. Destination regions may be designated by user input (e.g., selection of an image region by a user) or by other means (e.g., specification of a color or feature to be replaced). In addition, the order in which the destination region is filled by example tiles may be configured to emphasize the continuity of linear structures and composite textures using a type of isophote-driven image-sampling process.

The article "Topography preserving, non-linear inpainting for autonomous bare earth Digital Elevation Model (DEM) reconstruction", by Rahmes et al., MAPPS/ASPRS 2006 Fall Conference, November 6-10, 2006, discloses a geospatial modelling system where missing DEM data are inpainted by means of a method which is an extension of the image inpainting method described in the article "Image inpainting", by Bertalmio et al., SIGGRAPH 2000 Conference Proceedings, July 2000, pages 417-424, to DEMs.

Another way in which geospatial model data can end up with voids therein is when the data is collected in the frequency domain, as is the case with Synthetic Aperture Radar (SAR) data collection. That is, a SAR returns a map or representation of radar reflectivity including both amplitude and phase over a plurality of different frequencies. However, due to interference from existing signal sources, during some SAR scans certain frequency bands may experience interference in the resulting SAR data. Moreover, the operator of the SAR may have to intentionally omit or block certain frequency bands in certain geographical areas from the scan to avoid interfering with such communication sources. Further, hardware malfunctions may result in pulse dropouts. In each of these cases, the result is that the frequency domain representation of the area of interest will have gaps or voids therein, which when converted to the spatial domain cause the resulting geospatial model image to be distorted.

Generally speaking, various approaches have been used to address the effects of interference in frequency domain data. One approach is to use linear interpolation. Super resolution and/or iterative convolution techniques have also been used which assume a point like target in the image. Moreover, hardware approaches have also been implemented to alter mode hopping to avoid interference or listening on pilot pulses to characterize the interference.

Another approach to interference suppression in SAR images is set forth in an article entitled "Interference Suppression in Synthesized SAR Images" by Reigber et al., IEEE Geoscience and Remote Sensing Letters, vol. 2, no. 1, January 2005. This article proposes an interference suppression approach that relies on the transformation of synthesized SAR images into a representation where common raw-data interference filtering methods can be applied. More particularly, this approach uses a posteriori filtering.

The IEEE article "Reconstruction of sparse bandwidth by regularization method in SAR imagery", by Bosser et al., 2006 Conference on Radar, April 2006, pages 342-349, discloses a method of filling in voids in SAR data, i.e. filling in the missing data in the frequency domain.

Despite the advantages such prior art approaches may provide in certain applications, further advancements may be desirable for filling voids in geospatial and other model data.

In view of the foregoing background, the present disclosure presents a modeling system, such as a geospatial modeling system, and related methods which may advantageously fill voids within model data and related methods.

This and other objects, features, and advantages are provided by a geospatial modeling system which may include a geospatial model data storage device and a processor. The processor may cooperate with the geospatial model data storage device for wavelet decomposing at least one geospatial model frequency domain data set having at least one void therein to define a plurality of scaled versions of the geospatial model frequency domain data set. Moreover, the processor may further cooperate with the geospatial model data storage device for inpainting data into the at least one void to define a plurality of inpainted scaled versions of the geospatial model frequency domain data set, and reconstructing the plurality of inpainted scaled versions of the geospatial model frequency domain data set into a reconstructed geospatial model frequency domain data set.

More particularly, the at least one geospatial model frequency domain data set may comprise a plurality thereof. As such, the processor may further cooperate with the geospatial model storage device for windowing geospatial model spatial domain data to define a plurality of windowed geospatial model spatial domain data sets, and transforming the windowed geospatial model spatial domain data sets into the plurality of geospatial model frequency domain data sets. Furthermore, the processor may transform the reconstructed geospatial model frequency domain data set into a reconstructed geospatial model spatial domain data set. In addition, a display may be coupled to the processor for displaying the reconstructed geospatial model spatial domain data set.

By way of example, the at least one geospatial model frequency domain data set may comprise synthetic aperture radar (SAR) data. The at least one geospatial model frequency domain data set may also comprise K-space data, for example. Additionally, the processor may inpaint by propagating contour data from outside the at least one void along a direction of lines of constant contour from outside the at least one void into the at least one void. More particularly, the processor may iteratively propagate the contour data from outside the at least one void into the at least one void. Further, the contour data may comprise at least one of phase and amplitude data. The processor may perform inpainting based upon a functional partial differential equation model and/or a stochastic model, for example.

A geospatial modeling method aspect may include wavelet decomposing at least one geospatial model frequency domain data set having at least one void therein to define a plurality of scaled versions of the geospatial model frequency domain data set. The method may further include inpainting data into the at least one void to define a plurality of inpainted scaled versions of the geospatial model frequency domain data set, and reconstructing the plurality of inpainted scaled versions of the geospatial model frequency domain data set into a reconstructed geospatial model frequency domain data set.

FIG. 1 is a schematic block diagram of a data modeling system in accordance with the invention.

FIGS. 2A and 2B are K-space and image space representations, respectively, of a non-distorted SAR data set.

FIGS. 3A and 3B are K-space and image space representations, respectively, of a distorted version of the SAR data set illustrated in FIGS. 2A and 2B.

FIG. 4 is the image space representation of FIG. 3B with a window grid overlay illustrating a windowing scheme in accordance with an aspect of the invention.

FIGS. 5A and 5B are K-space and image space representations, respectively, of a spatial window of the distorted image space data set of FIG. 4.

FIG. 6 is an image space representation of a plurality of scatterer points illustrating another windowing technique in accordance with an alternative embodiment.

FIGS. 7A-7E are respective K-space representations of each windowed image space scatterer point of FIG. 6.

FIGS. 8A-8E are the K-space representations of FIGS. 7A-7E after inpainting.

FIG. 9 is a reconstructed image space representation generated from the inpainted K-space data sets of FIGS. 8A-8E.

FIG. 10 is a series of scaled K-space wavelet representations of the K-space data set of FIG. 3A.

FIG. 11 is the K-space representation of FIG. 3A with a window grid overlay illustrating a windowing scheme for spectral interpolation .

FIG. 12 is a K-space representation of a portion of FIG. 3A illustrating an alternative windowing scheme for spectral interpolation

FIG. 13 is a K-space representation of a corrupted SAR data set illustrating the use of different inpainting boundary geometries.

FIGS. 14-21 are flow diagrams illustrating various model data windowing, inpainting, and/or reconstruction method aspects in accordance with the invention.

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

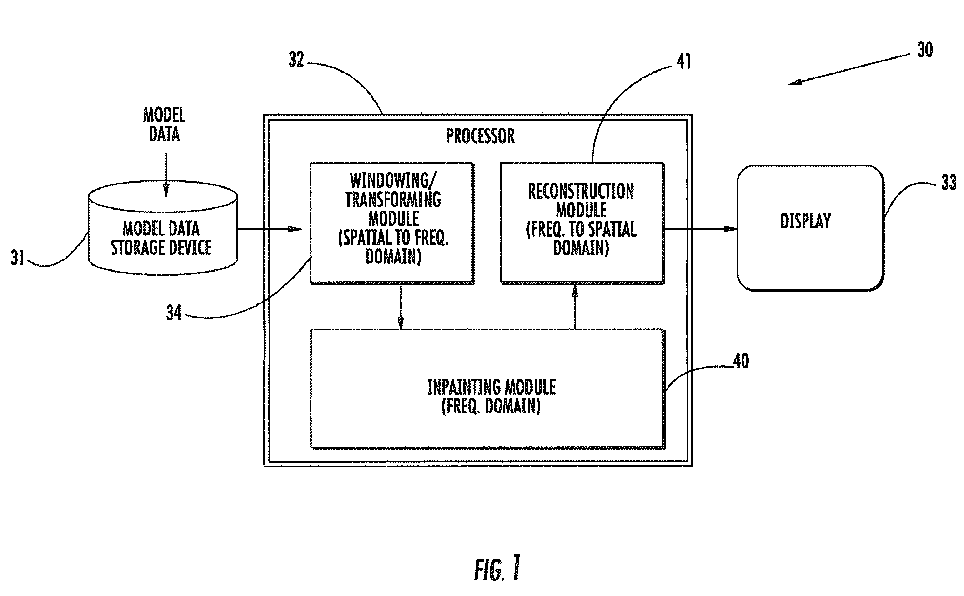

Referring initially to FIG. 1, a modeling system **30,** such as a geospatial modeling system, illustratively includes a model data storage device **31** for storing geospatial model data and a processor **32.** By way of example, the processor **32** may be a central processing unit (CPU) of a PC, Mac, Sun, or other computing workstation, for example. A display **33** may be coupled to the processor **32** for displaying modeling data. The processor **32** advantageously reconstructs or repairs corrupted model data, such as geospatial model data, by inpainting voids in the data, as will be discussed further below. To this end, the processor **32** illustratively includes a windowing/transforming module **34,** an inpainting module **40,** and a reconstruction module **41.** While these modules are shown and described as separate components for clarity of reference, those skilled in the art will appreciate that the various functions of these components may be implemented with a combination of hardware and software, and that these software components may be included in the same overall software application, for example.

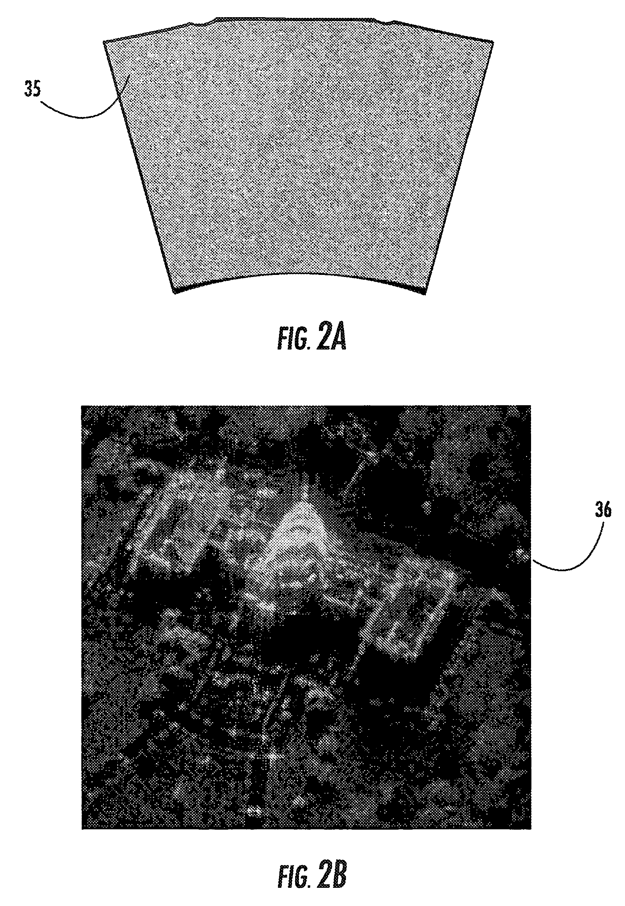

Turning additionally to FIGS. 2A-2B, an exemplar synthetic aperture radar (SAR) geospatial data set is shown for a non-corrupted or non-distorted data capture. That is, FIGS. 2A and 2B represent the ideal case in which no holes or voids in the data have occurred during data capture, such as from interference, notched frequencies, equipment malfunctions, etc., as will be appreciated by those skilled in the art. In particular, the SAR data capture shown is of the U.S. Capitol building.

Generally speaking, one or more data captures of a particular geospatial area of interest are performed to obtain 3D elevation versus position data. The data capture may be performed using various techniques, such as stereo optical imagery, Light Detecting And Ranging (LIDAR), SAR or Interferometric Synthetic Aperture Radar (IFSAR), etc. Generally speaking, the data will be captured from nadir views of the geographical area of interest by airplanes, satellites, etc., as will be appreciated by those skilled in the art. However, oblique images of a geographical area of interest may also be used in addition to or instead of the images to add additional 3D detail to a geospatial model. It should also be noted that the types of data to which the inpainting techniques described below may be applied are not limited to geospatial model data. Rather, these techniques may also be applied to other types of model data that may be represented and processed in the frequency domain or K-space, such as magnetic resonance imaging (MRI) data, for example.

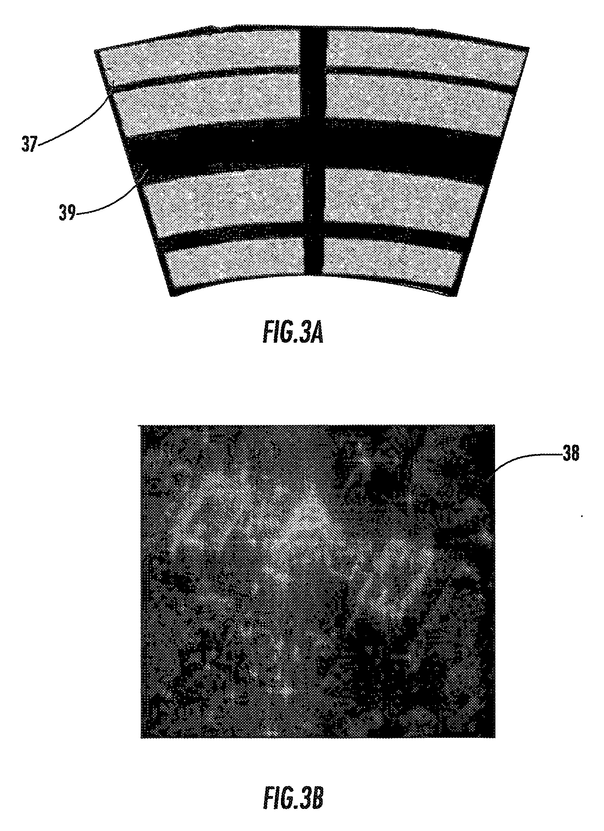

FIGS. 3A and 3B show the effects of voids **39** in the K-space geospatial data **37,** which results in a blurred image space data set **38.** The processor **32** advantageously uses various inpainting techniques to fill in or repair the voids **39** in frequency data sets, such as the illustrated K-space data set **38,** to thereby achieve a reconstructed corresponding image space data set that more closely resembles the uncorrupted image space data set **35.** By way of background, exemplary inpainting techniques that may be implemented by the processor **32** are set forth in co-pending U.S. Patent Application Publication No. US 2008/0019571 to Rahmes et al., which is assigned to the present Assignee .

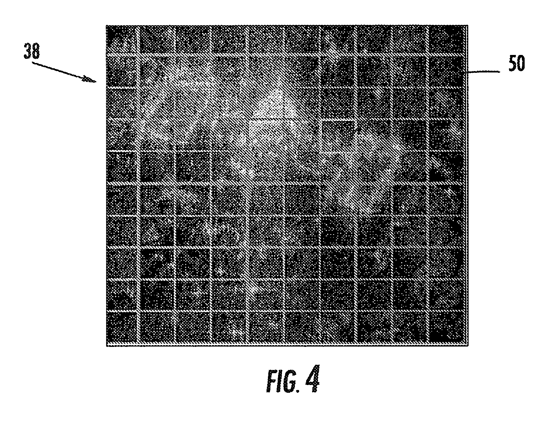

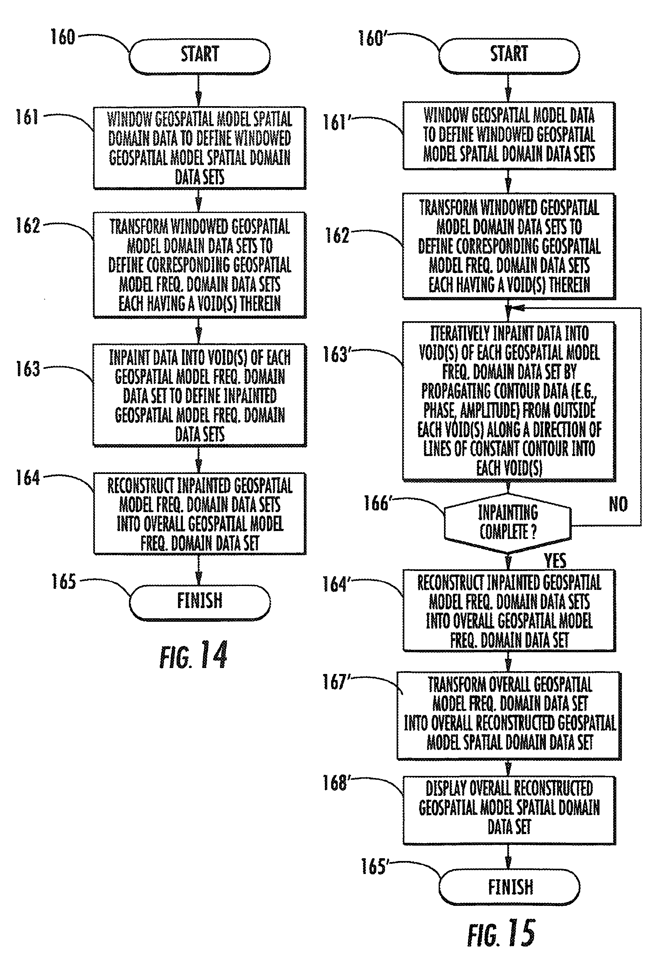

Further inpainting aspects are now described with reference to FIGS. 4-9 and 14-15. While in some implementations an entire data set may be inpainted as a whole to provide desired reconstruction accuracy, in other cases there may be a need to "smooth" the data so that the various inpainting model functions can provide more accurate data reconstruction. Beginning at Block **160,** a spatial domain data set, such as the geospatial spatial domain data **38** may advantageously be divided into a plurality of windows **50** (herein referred to as "windowed" or "windowing") by the windowing module **34**. It should be noted that depending upon the format of the model data stored in the model data storage device **31** (i.e., if the collected/stored data is frequency domain or K-space data), the windowing module **34** may first transform the data to the spatial domain prior to performing windowing operations.

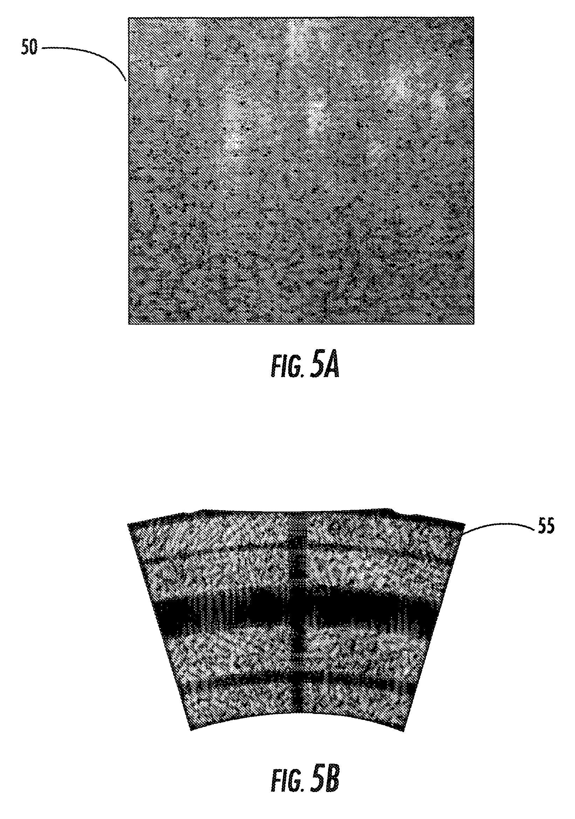

One of the windows **50** is shown in greater detail in FIG. 5A. The windowed image space data set **50** results in a corresponding K-space data set **55** (FIG. 5B) when transformed to K-space which, while having a reduced resolution with respect to the overall K-space data set **37** (FIG. 3A), generally has smoother phase and/or amplitude values than the overall K-space data set. This is because less frequency voids are included in the K-space data set, so there is less "smearing" caused by the voided data being spread throughout the K-space data set, as will be appreciated by those skilled in the art. Stated alternatively, there are less discontinuities in the phase/amplitude values of the geospatial K-space data set **55** than in the overall K-space data set **37**. With partial differential equation (PDE) based inpainting models, for example, it may be difficult to obtain derivatives for data sets with large numbers of phase/amplitude discontinuities, as will also be appreciated by those skilled in the art.

The windowing scheme used in FIG. 4 is a relatively straightforward grid, in which the geospatial image data set **38** is divided into a plurality of equally sized squares as shown. Different window sizes and geometries are also possible in some embodiments. This approach may be considered mathematically as follows:

f(x,y) represents the image, and the image domain is partitioned into mn squares, indexed by ij, $1 \le i \le m$, $1 \le j \le n$; let $x_{ij}(x,y)$ be the characteristic/windowing function of each sub square, and $f(x,y) = \sum f(x,y) \, x_{ij}(x,y)$.

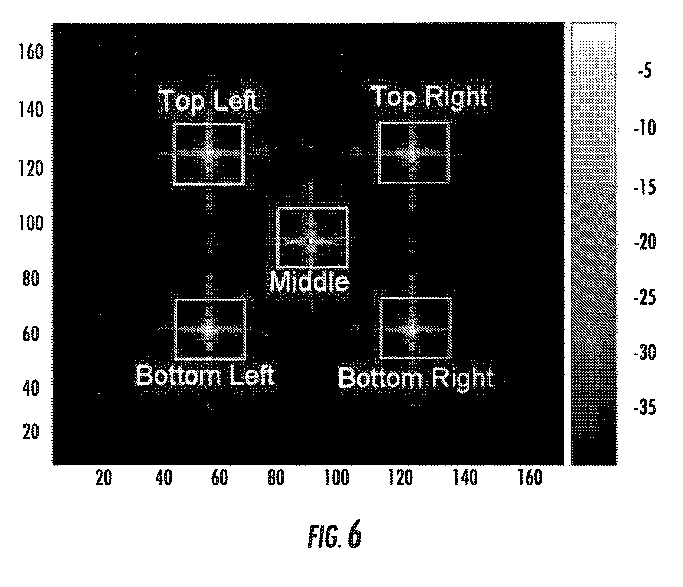

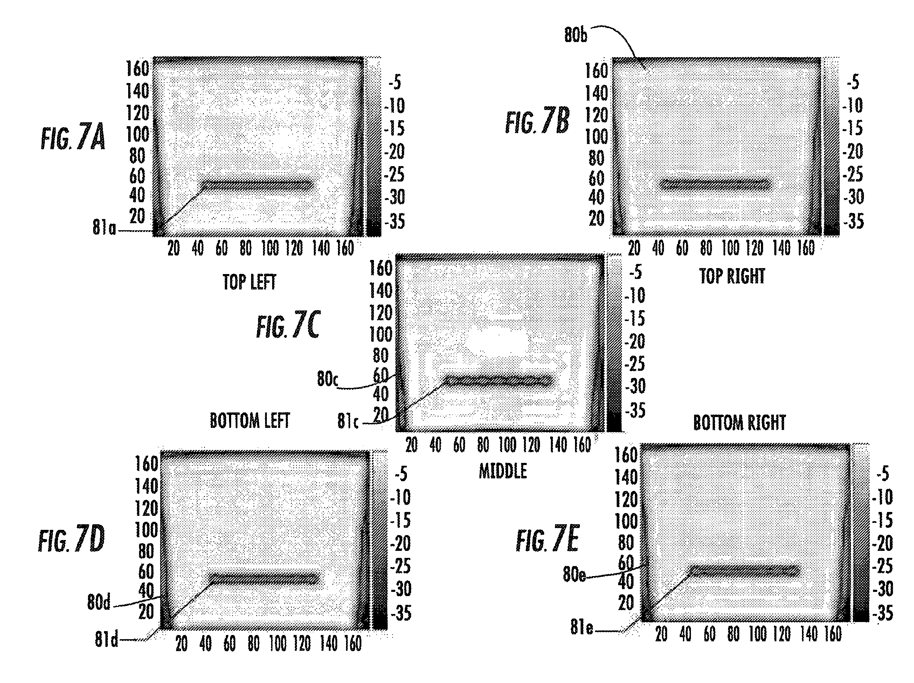

Moreover, other windowing techniques may also be used. One such technique is illustrated in FIGS. 6-9, wherein rather than dividing an entire spatial domain data set into windows, windows are instead placed around the most problematic portions of the spatial domain data set, such as the five scatterer points included in the "top left," "top right," "middle," "bottom left," and "bottom right" windows in FIG. 6. The corresponding frequency domain (i.e., K-space) data sets **80a-80e** corresponding to these five spatial domain scatterer point windows are shown in FIGS. 7A-7E, respectively. Each includes a respective void **81a-81e.**

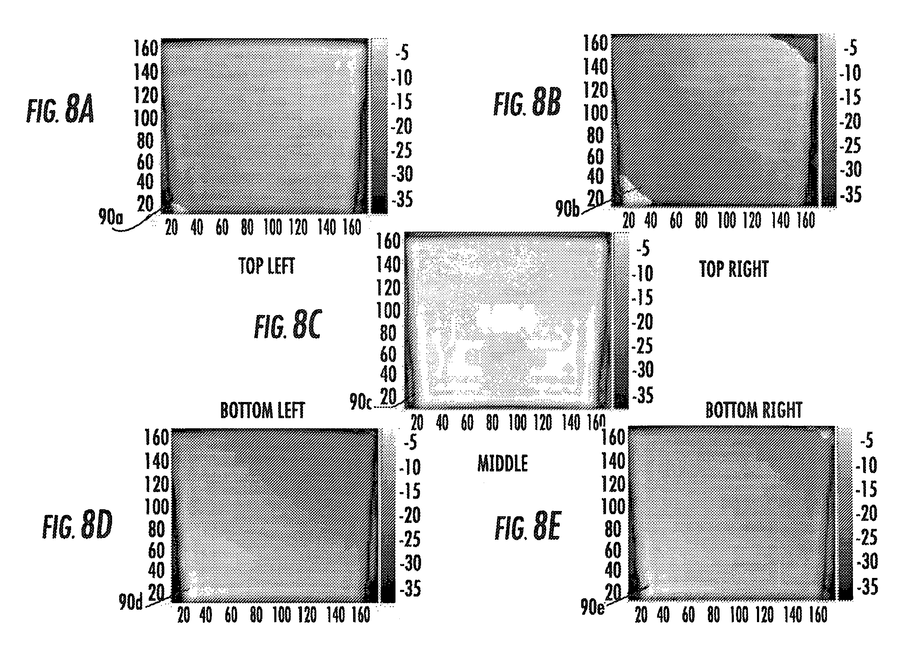

Once the windowed geospatial model spatial domain data sets **50** are transformed to define corresponding geospatial model frequency domain data sets **55,** at Block **162,** then the inpainting module **40** may advantageously begin inpainting the void(s) therein, at Block **163,** to define inpainted geospatial model frequency domain data sets **90a-90e,** which for the above-noted scatterer windows are shown in FIGS. 8A-8E. Generally speaking, the voids **81a-81e** are inpainted by iteratively propagating contour (i.e., phase/amplitude) data from outside a given void into the given void (Blocks **163'** and **166'**). More particularly, the processor **22** inpaints by propagating contour data from outside the given void along a direction of lines of constant contour from outside the given void into the void. More particularly, the lines of constant contour may be based upon isophote and gradient directions at given points along the void boundary, as discussed further in the above-noted US 2008/0019571 application.

Various inpainting models may be used that are based upon different fluid flow modeling equations, such as PDEs, Stochastic, etc. By way of example, one general inpainting equation that may be used by the inpainting module **40** for the inpainting operations is the following:

$$\frac{\partial I}{\partial t} + \nabla^{\perp} I \bullet \nabla(\Delta I) = div(g(|\nabla I|)\nabla I), \, where \, \Delta I = \nabla^2 I, \text{ i.e. the Laplacian.} \qquad (1)$$

In equation (1), $\dfrac{\partial I}{\partial t}$ is a time component of the equation, $\nabla \cdot I \bullet (\Delta I)$ is a convective component, and $div(g(|\nabla I|)\nabla I)$ is an anisotropic diffusion component, as will be appreciated by those skilled in the art.

Another inpainting approach is based upon Navier-Stokes' equations, one implementation of which is as follows:

$$v_t + v \bullet \nabla v = -\nabla p + \upsilon \Delta v, \nabla \bullet v = 0$$

where $\nabla^{\perp} \Psi = v = \langle -\dfrac{\partial \Psi}{\partial y}, \dfrac{\partial \Psi}{\partial x} \rangle$, $\Psi$ is the Stream Function;

$$\nabla \times (\nu_t + \nu \bullet \nabla \nu) = \nabla \times (-\nabla p + \nu \Delta \nu), where \nabla \times \nu = \varpi, thus, \varpi_t + \nu \bullet \nabla \varpi = \nu \nabla^2 \varpi,$$

$\omega = \nabla^2 \Psi$ (i.e., the Laplacian); and the Stream Function is defined as:

$$\Psi = I(x, y) \to r, where\, r \in \Re \text{ and } x, y \in N.$$

Other inpainting models may be based upon Bertozzi, Sapiro, and Bartalmio equations, for example, as will be appreciated by those skilled in the art. An exemplary functional PDE inpainting approach is as follows:

For each k, where k represents the different scales of the wavelength decomposition,

$$\frac{\partial \nu_k}{\partial t} + \nu_k \bullet \nabla F_k(t, x, y, \nu_k, \nu_x) = 0,$$

where $F_k(t, x, y, \nu_k, \nu_x) = \alpha_k \delta_{mk} \iint_{N_r^k(0,0)} \nu_x(t, \xi, \eta)d\xi d\eta + \beta_k \nu_k(x, y),$

$$\nu_x(t, \xi, \eta) = \nu(t, x + \xi, y + \eta),$$

and

$$\nu_k(x, y) = u(x, y) + c_k(x, y)n_k(x, y);$$

for $(\xi, \eta) \in N_r^k(0,0),$ the $\delta_{mk}$ is the Kronecker delta.

$\alpha_{mk}, \beta_k$ are suitably chosen constants and the function $C_k(x,y)$ is a weight function that appropriately turns the noise term "on" or "off".

Also, $N_r^k(0,0)$ is a neighborhood of the origin.

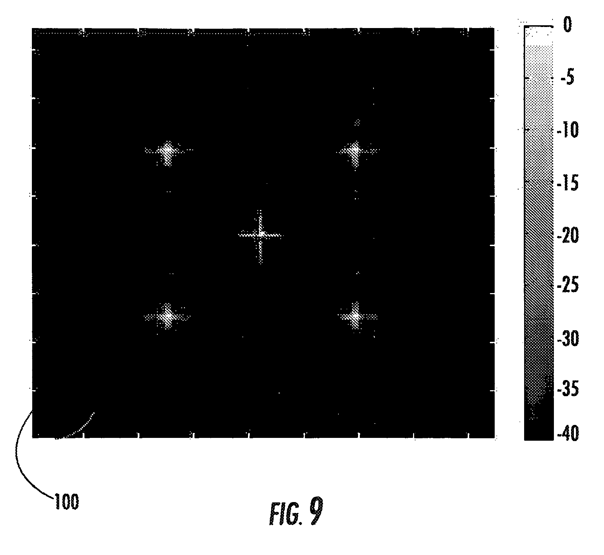

The inpainted geospatial model frequency domain data sets **90a-90e** may then be reconstructed by the reconstruction module **41** into an overall geospatial model frequency domain data set, at Block **164,** thus concluding the illustrated method (Block **165**). Thereafter, it may be further transformed to an overall reconstructed geospatial model spatial domain data set **100** (FIG. 9), at Block **167',** for display on the display **33** (Block **168'),** as will be appreciated by those skilled in the art.

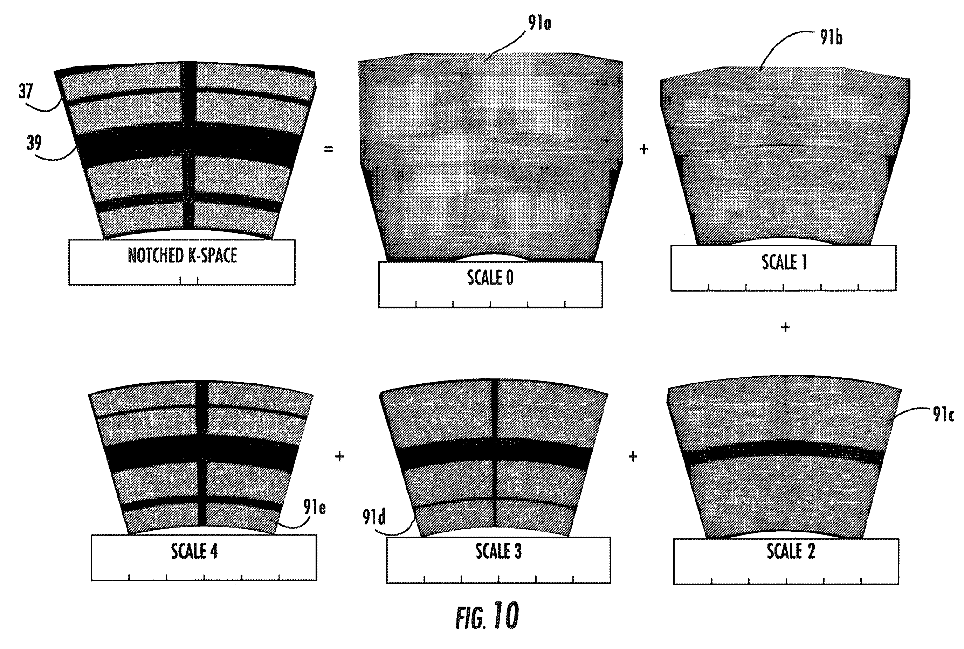

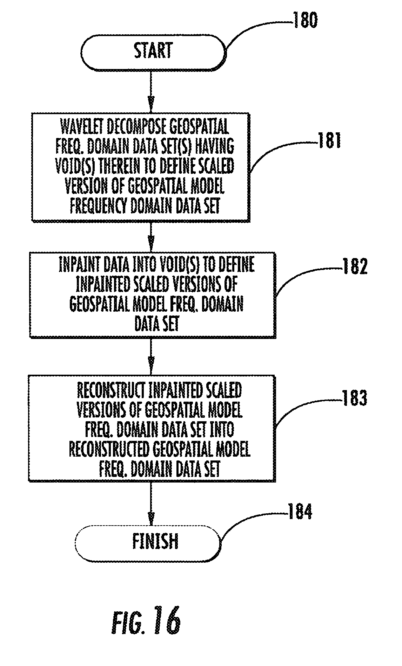

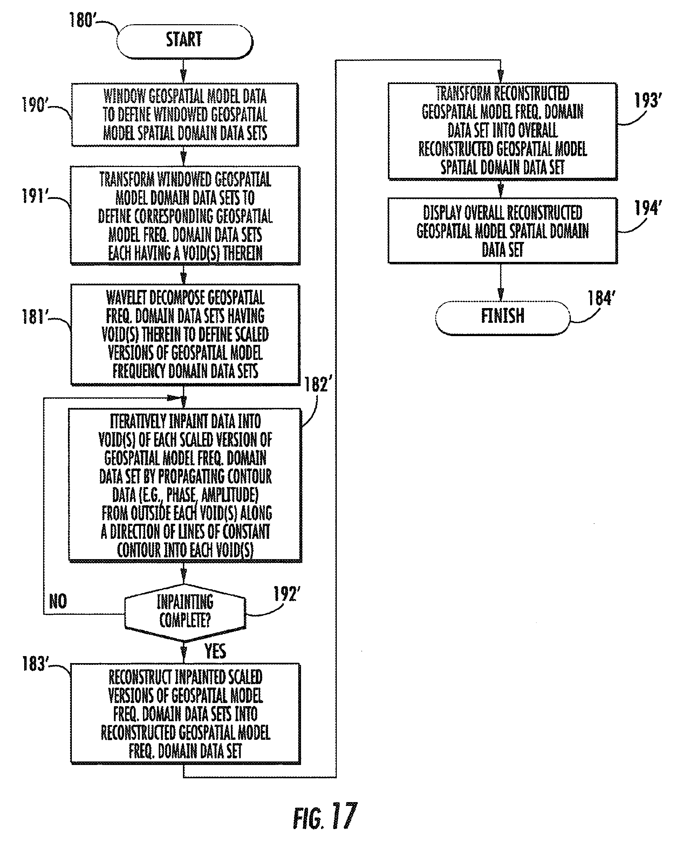

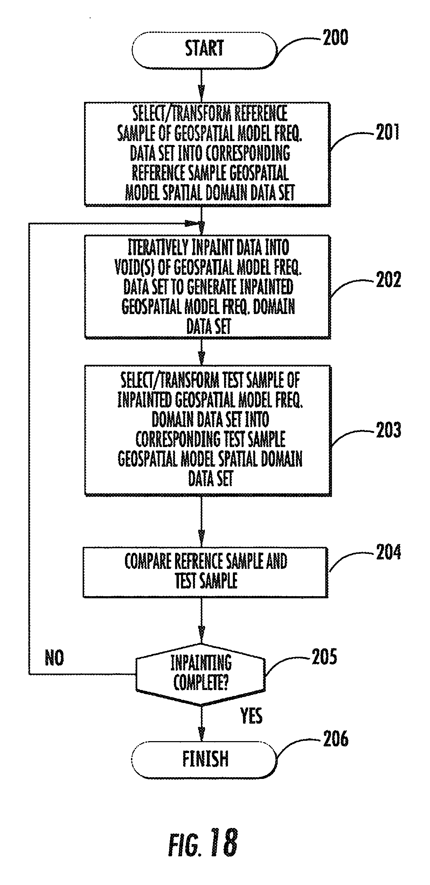

Turning now additionally to FIGS. 10 and 16-17, another technique which may be used by the processor **32** to provide still greater accuracy when reconstructing holes in frequency/K-space data through inpainting is to first perform wavelet decomposition on the given frequency/K-space data set(s) prior to inpainting. More particularly, beginning at Block **180,** the geospatial model frequency domain data set **50** is decomposed by the windowing/transforming module **34** to define scaled versions **91a-91e** thereof, as seen in FIG. 10 (Block **181).** As will be appreciated by those skilled in the art, wavelet decomposition generates an expansion series with different order terms that represent different levels or resolutions (i.e., scales) of the overall geospatial model frequency domain data set **50.** As such, the inpainting module **40** may then inpaint data into the voids **39** of each of the scaled data sets **91a-91e**, at Block **182,** and the inpainted scaled versions may then be reconstructed (i.e., amalgamated) into a reconstructed geospatial model frequency domain data set (Block **183**) by the reconstruction module, thus concluding the method illustrated in FIG. 18 (Block **184**).

By first performing wavelet decomposition and then performing inpainting on each of the scaled versions **91a-91e** of the K-space data set **37,** this may advantageously provide more accurate inpainting results than simply inpainting the unscaled K-space data set in its entirety. An exemplary wavelet decomposition equation that may be used is as follows:

$$f(X) = \sum c_{jk}\, \psi_{jk}(X)$$
$$\text{where } \psi_{jk}(X) \text{ are two dimensional wavelets} \tag{2}$$

More particularly, the wavelet decomposition operations may be considered as follows:

for each I, j, is

$$F(f(x,y)\,\chi_{ij}(x,y)) = \sum c_{mn}\, \phi_{mn}(x,y) + d_{mn}\, \psi^1_{mn}(x,y)$$
$$+ e_{mn}\, \psi^2_{mn}(x,y) + f_{mn}\, \psi^3_{mn}(x,y)$$

where $\phi_{mn}(x,y),\ \psi^1_{mn}(x,y),\ \psi^2_{mn}(x,y),\ \psi^3_{mn}(x,y)$ are two dimensional wavelets. K space data is inpainted using the FPDE model with a "noise like" term, which is generally applicable to low scales, and K space data inpainted by a PDE model with a "noise like" term is generally applicable to high scales. The amalgam of the inpainted versions is taken to form the repaired image.

While the above-noted wavelet decomposition approach need not be used in conjunction with the windowing operations described above in all embodiments, in some embodiments it may be desirable to perform the spatial windowing followed by transformation of the windowed data sets to corresponding frequency domain data sets prior to wavelet decomposition (Blocks 190'-191'). Here again, the inpainting operations may be performed iteratively (Blocks 182', 192'), and the reconstructed geospatial model frequency domain data set may be transformed into an overall reconstructed geospatial model spatial domain data set for display on the display 33 (Blocks 193', 194'), as similarly discussed above.

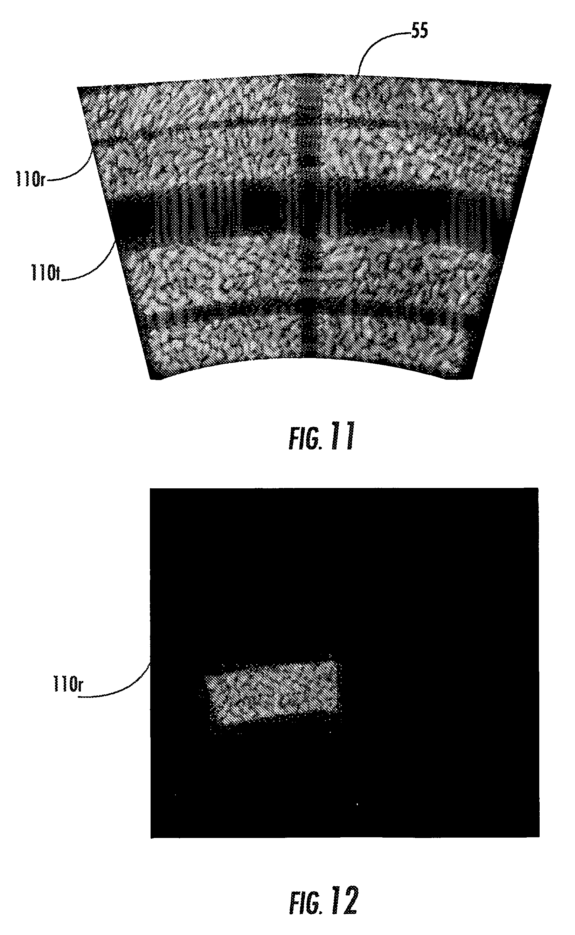

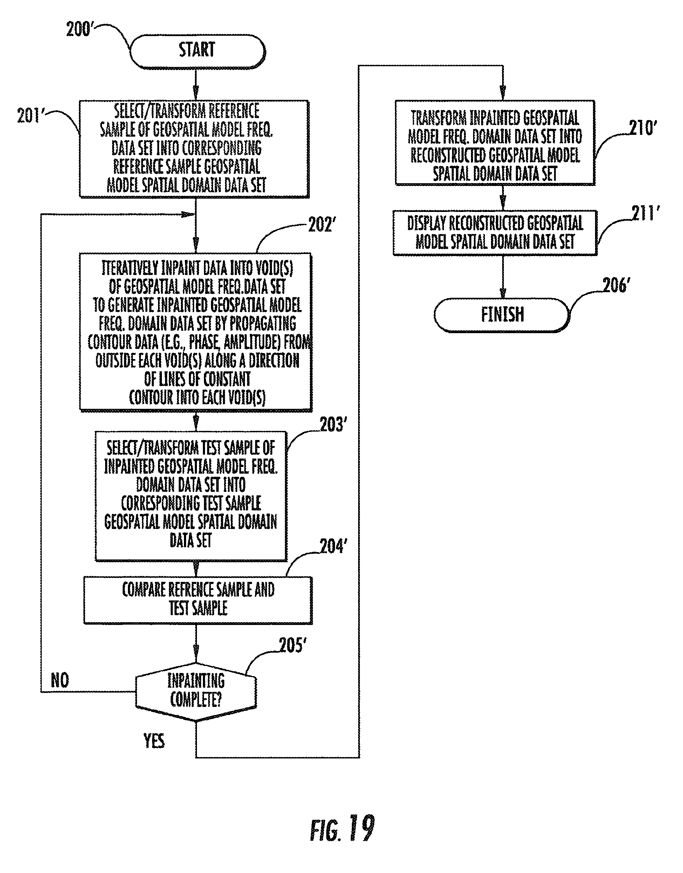

In accordance with another advantageous aspect not within the scope of the present invention as defined by the present claims and now described with reference to FIGS. 11, 12, 18, and 19, an approach for determining when desired accuracy has been obtained so that the iterative inpainting operations can be stopped is now described. Beginning at Block 200, a reference sample 110r of the geospatial model frequency data set 55 is selected and transformed into a corresponding reference sample geospatial model spatial domain data set, at Block 201. By way of example, the reference sample 110r may be selected using a relatively straightforward windowing approach similar to that described above, but instead of using a grid to window spatial domain data, the grid here is instead applied to the frequency domain data set 55 to define a plurality of frequency domain windows or data sets 110. Again, different grid shapes and sizes may be used in different examples. Preferably, the reference sample data set 110r will be one which includes little or no voids, as this will provide a more accurate corresponding spatial data set to use as a reference in subsequent operations.

The inpainting module 40 iteratively inpaints data into one or more voids in the geospatial frequency domain data set 55, as discussed further above, at Block 202. Furthermore, a test sample 110t of the inpainted geospatial model frequency domain data set 55 is selected and transformed into a corresponding test sample geospatial model spatial domain data set, at Block 203. More particularly, the test sample 110t is preferably from a voided area where data has been inpainted. As such, the processor 32 can advantageously compare the spatial domain reference sample 110r and test sample 110t to determine whether to stop the iterative inpainting within the test sample area, at Blocks 204-205, thus concluding the illustrated method (Block 206).

In particular, the comparison may involve comparison of a resolution level of the test sample 110t to determine if it has achieved a certain threshold level of the reference sample 110r resolution. For example, if the accuracy of the test sample 110t achieves a resolution level of 80% of that of the reference sample 110r, then inpainting is deemed completed for that test sample area. Otherwise, iterative inpainting will continue. It should be noted that different threshold levels may be used in different examples.

The comparison between the test sample 110t (with voids) and the reference sample 110r (without voids) is made possible by the holographic properties of the K-space data. That is, any given subset of the K-space data set 55 will produce the same image in image space as the entire K-space data set, just at a reduced resolution level (i.e., with more distortion). Therefore, by comparing two comparably sized samples of the K-space data, one of which has substantially no voids (i.e., the reference sample 110r) and that other which has a void(s) that is being inpainted (i.e., the reference sample **110t),** it can be determined when the accuracy of the inpainted sample area adequately compares with that of the reference sample area for stopping purposes.

As discussed further above, the completed reconstructed geospatial model frequency domain data set may be transformed into a reconstructed geospatial model spatial domain data set for display, at Blocks **210'-211'.** It should also be noted that different approaches for selecting samples may be used instead of the grid method described above with reference to FIG. 11. By way of example, a reference sample **110r'** may be selected that is in between spaced apart voids (i.e., an area without voids), as seen in FIG. 12. Other suitable approaches for selecting reference samples may also be used, as will be appreciated by those skilled in the art. It should be noted that the foregoing stopping technique may be used with or without the windowing and wavelet decomposition techniques described above.

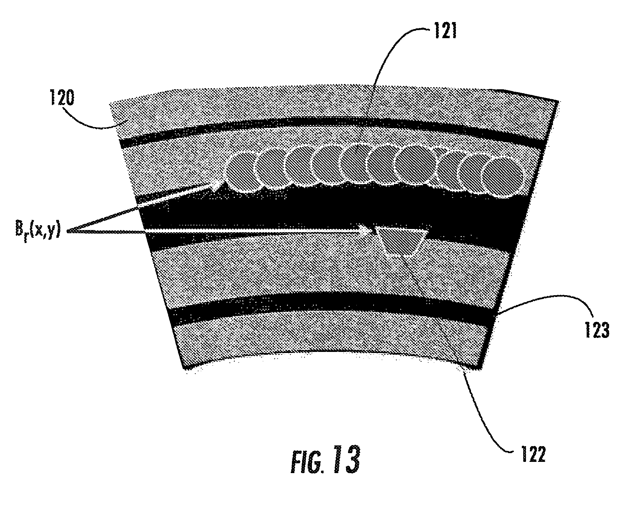

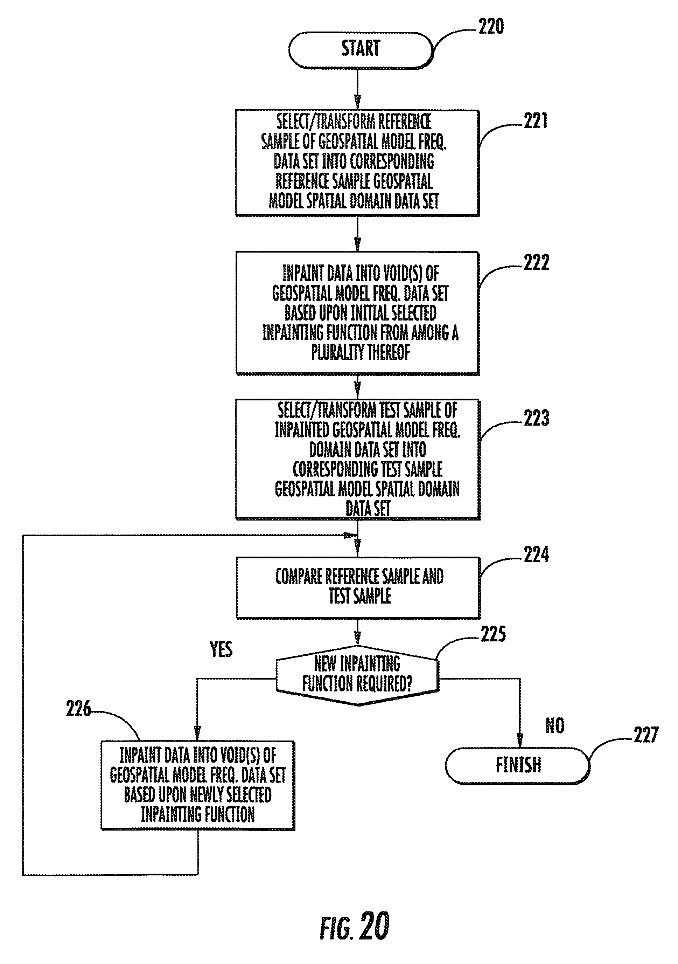

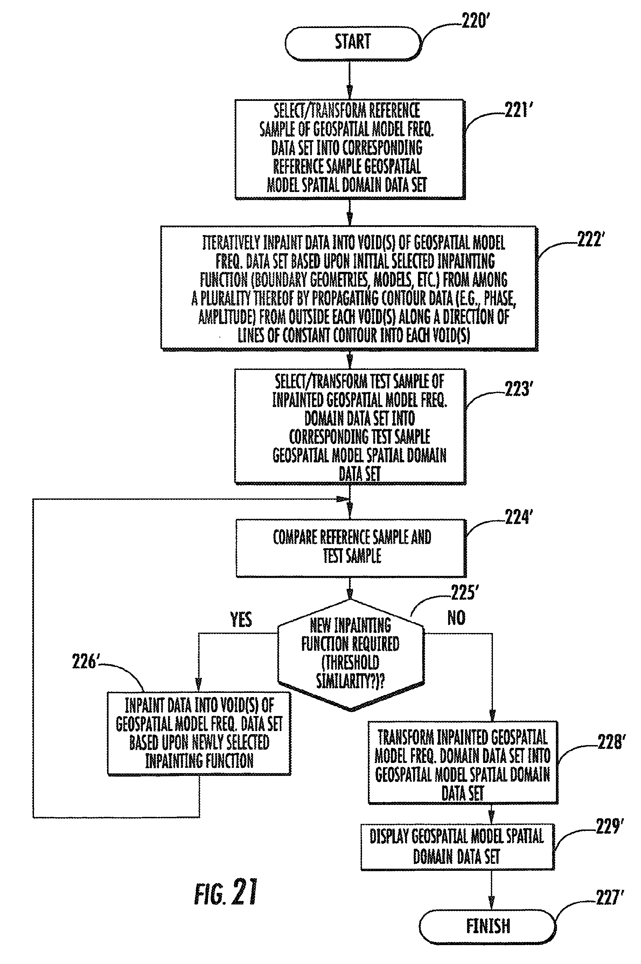

Referring now additionally to FIGS. 13 and 20-21, another advantageous aspect likewise not within the scope of the present invention as defined by the present claims for selectively changing inpainting functions used for the inpainting operations is now described. As seen in FIG. 13, one example of different inpainting functions that may be used are different inpainting geometries, such as the illustrated circular and trapezoidal boundary areas **121** and **122** of a K-space geospatial data set **120.** More particularly, the inpainting module **40** may perform inpainting within each of the individual boundary areas **121** and **122** until inpainting is complete. However, using different boundary shapes may advantageously provide more accurate inpainting in different embodiments depending upon the particular shapes and/or sizes of the voids **123** to be inpainted, as will be appreciated by those skilled in the art. Different inpainting geometries may be used at different locations in a same data set, as shown in some examples, or the same geometry may be selectively used throughout in a given example.

Another inpainting function that can be selectively changed is the inpainting model equation or algorithm being used. As noted above, different modeling equations such as functional PDEs, stochastic models, Navier-Stokes', etc., may be used for different data sets, and/or for different locations within a same data set. The choice of which geometry, inpainting equation, etc., to use will generally depend upon factors such as the smoothness of the data to be inpainted, the size of the voids to be inpainted, the desired accuracy level, processing constraints, etc., as will be appreciated by those skilled in the art.

An exemplary approach for determining which inpainting function(s) to use for inpainting a given set of frequency domain model data **120** begins at Block **220** with selecting and transforming a reference sample of the model data into a corresponding reference sample spatial domain data set, at Block **221.** Data is inpainted into one or more voids **123** of the data set **120** based upon one or more initial selected inpainting functions from among a plurality thereof, as described above, at Blocks **222, 222'.** More particularly, there may be a plurality of different inpainting function types (e.g., inpainting boundary geometry, inpainting equation, etc.), and for each type there may be a plurality of different functions, as noted above. Thus, the processor **32** may select not only from among different function types, but for each function type may also advantageously select from a plurality of different functions within the function type.

A test sample of the inpainted model frequency domain data is selected and transformed into a corresponding test sample spatial domain data set, at Block **223.** Similar to the above-described stopping approach, the reference sample is then compared with the test sample to determine whether a new inpainting function (and/or function type) is required, e.g., based upon a threshold difference between the two, as described above (Blocks **225, 225').** If the initial function does not provide the desired accuracy/results, then a new inpainting function is selected accordingly, at Block **226',** and the test sample is inpainted once again based thereon. Once the desired accuracy is obtained, the inpainted model frequency domain data set is transformed into a corresponding spatial domain data set (Block **228')** for display on the display **33,** at Block **229,** thus concluding the illustrated method (Block **227, 227').**

**Claims**

1.  A geospatial modeling system (30) comprising:

    a geospatial model data storage device (31); and
    a processor (32) cooperating with said geospatial model data storage device for
    wavelet decomposing (181,181') at least one geospatial model frequency domain data set having at least one void therein to define a plurality of scaled versions of the geospatial model frequency domain data set,
    inpainting data (182,182') into the at least one void to define a plurality of inpainted scaled versions of the geospatial model frequency domain data set, and
    reconstructing (183, 183') the plurality of inpainted scaled versions of the geospatial model frequency domain data set into a reconstructed geospatial model frequency domain data set.

2.  The geospatial modeling system of Claim 1 wherein the at least one geospatial model frequency domain data set comprises a plurality thereof; and wherein said processor further cooperates with said geospatial model data storage device for:

windowing (190') geospatial model spatial domain data to define a plurality of windowed geospatial model spatial domain data sets; and
transforming (191') the windowed geospatial model spatial domain data sets into the plurality of geospatial model frequency domain data sets.

3. The geospatial modeling system of Claim 1 wherein said processor transforms (193') the reconstructed geospatial model frequency domain data set into a reconstructed geospatial model spatial domain data set.

4. The geospatial modeling system of Claim 1 wherein the at least one geospatial model frequency domain data set comprises synthetic aperture radar (SAR) data.

5. The geospatial modeling system of Claim 1 wherein the at least one geospatial model frequency domain data set comprises K-space data.

6. A geospatial modeling method comprising:

wavelet decomposing (181,181') at least one geospatial model frequency domain data set having at least one void therein to define a plurality of scaled versions of the geospatial model frequency domain data set;
inpainting data (182,182') into the at least one void to define a plurality of inpainted scaled versions of the geospatial model frequency domain data set; and
reconstructing (183,183') the plurality of inpainted scaled versions of the geospatial model frequency domain data set into a reconstructed geospatial model frequency domain data set.

7. The method of Claim 6 wherein the at least one geospatial model frequency domain data set comprises a plurality thereof; and wherein the method further comprises:

windowing (190') geospatial model spatial domain data to define a plurality of windowed geospatial model spatial domain data sets; and
transforming (191') windowed geospatial model spatial domain data sets into the plurality of geospatial model frequency domain data sets.

8. The method of Claim 6 further comprising transforming (193') the reconstructed geospatial model frequency domain data set into a reconstructed geospatial model spatial domain data set.

9. The method of Claim 6 wherein the at least one geospatial model frequency domain data set comprises synthetic aperture radar (SAR) data.

10. The method of Claim 6 wherein the at least one geospatial model frequency domain data set comprises K-space data.


**Patentansprüche**

1. Georäumliches Modellierungssystem (30), mit:

einem Speichergerät (31) für georäumliche Modelldaten; und
einem Prozessor (32), der mit dem Speichergerät für georäumliche Modelldaten zusammenarbeitet, zur Wavelet-Zerlegung (181, 181') mindestens eines Datensatzes der georäumlichen Frequenzdomäne mit mindestens einem Leerraum darin, um eine Mehrzahl skalierter Versionen des Datensatzes der georäumlichen Frequenzdomäne zu definieren,
zum Einfüllen von Daten (182, 182') in den mindestens einen Leerraum, um eine Mehrzahl skalierter Versionen des Datensatzes der georäumlichen Frequenzdomäne, an dem ein Einfüllen vorgenommen wurde, zu definieren, und
zum Rekonstruieren (183, 183') der Mehrzahl skalierter Versionen des Datensatzes der georäumlichen Frequenzdomäne, an das Einfüllen vorgenommen wurde, zu einem rekonstruierten Datensatz der georäumlichen Frequenzdomäne.

**2.** Georäumliches Modellierungssystem nach Anspruch 1, bei dem der mindestens eine Datensatz der georäumlichen Frequenzdomäne eine Mehrzahl davon aufweist; und
bei dem der Prozessor ferner mit dem Speichergerät für georäumliche Modelldaten zusammenarbeitet, zur:

fenstertechnischen Verarbeitung (190') der Domänedaten des georäumlichen Modells, um eine Mehrzahl fenstertechnischer Domänedatensätze des georäumlichen Modells zu definieren; und
zum Transformieren (191') der fenstertechnischen Datensätze der Frequenzdomäne in die Mehrzahl Datensätze der Frequenzdomäne des georäumlichen Modells.

**3.** Georäumliches Modellierungssystem nach Anspruch 1, bei dem der Prozessor den rekonstruierten Datensatz der georäumlichen Frequenzdomäne in einen rekonstruierten Datensatz der georäumlichen Frequenzdomäne transformiert (193').

**4.** Georäumliches Modellierungssystem nach Anspruch 1, bei dem mindestens ein Datensatz der georäumlichen Frequenzdomäne Radardaten einer synthetischen Apertur (synthetic aperture radar; (SAR)) aufweist.

**5.** Georäumliches Modellierungssystem nach Anspruch 1, bei dem der mindestens eine Datensatz der georäumlichen Frequenzdomäne k-Raumdaten aufweist.

**6.** Verfahren zur georäumlichen Modellierung, mit:

Wavelet-Zerlegung (181, 181') mindestens eines Datensatzes der georäumlichen Frequenzdomäne mit mindestens einer Leerstelle darin, um eine Mehrzahl skalierter Versionen des Datensatzes der georäumlichen Frequenzdomäne zu definieren,
Einfüllen von Daten (182, 182') in die mindestens eine Leerstelle, um eine Mehrzahl skalierter Versionen des Datensatzes der georäumlichen Frequenzdomäne, an dem Einfüllen vorgenommen wurde, zu definieren; und
Rekonstruieren (183, 183') der Mehrzahl skalierter Versionen des Datensatzes der georäumlichen Frequenzdomäne, an dem Einfüllen vorgenommen wurde, zu einem rekonstruierten Datensatz der georäumlichen Frequenzdomäne.

**7.** Verfahren nach Anspruch 6, bei dem der mindestens eine Datensatz der georäumlichen Frequenzdomäne eine Mehrzahl davon aufweist; und bei dem das Verfahren ferner aufweist:

fenstertechnische Verarbeitung (190') der Domänedaten des georäumlichen Modells,
um eine Mehrzahl fenstertechnischer Datensätze der Frequenzdomäne des georäumlichen Modells zu definieren; und
Transformieren (191') der fenstertechnischen Frequenzdomänedatensätze in die Mehrzahl Datensätze der Frequenzdomäne des georäumlichen Modells.

**8.** Verfahren nach Anspruch 6, das ferner das Transformieren (193') des rekonstruierten Datensatzes der georäumlichen Frequenzdomäne in einen rekonstruierten Datensatz der georäumlichen Frequenzdomäne aufweist.

**9.** Verfahren nach Anspruch 6, bei dem der mindestens eine Datensatz der georäumlichen Frequenzdomäne Radardaten einer synthetischen Apertur (SAR)) aufweist.

**10.** Verfahren nach Anspruch 6, bei dem der mindestens eine Datensatz der georäumlichen Frequenzdomäne k-Raumdaten aufweist.

**Revendications**

**1.** Système de modélisation géospatiale (30) comprenant :

un dispositif de stockage de données de modèle géospatial (31) ; et
un processeur (32) coopérant avec ledit dispositif de stockage de données de modèle géospatial pour décomposer en ondelettes (181, 181') au moins un ensemble de données dans le domaine fréquentiel de modèle géospatial ayant au moins un vide dans celui-ci pour définir une pluralité de versions mises à l'échelle de l'ensemble de données dans le domaine fréquentiel de modèle géospatial,

retoucher des données (182, 182') dans l'au moins un vide pour définir une pluralité de versions mises à l'échelle retouchées de l'ensemble de données dans le domaine fréquentiel de modèle géospatial, et
reconstruire (183, 183') la pluralité de versions mises à l'échelle retouchées de l'ensemble de données dans le domaine fréquentiel de modèle géospatial en un ensemble de données dans le domaine fréquentiel de modèle géospatial reconstruit.

2. Système de modélisation géospatiale selon la revendication 1, dans lequel l'au moins un ensemble de données dans le domaine fréquentiel de modèle géospatial comprend une pluralité de celui-ci ; et dans lequel ledit processeur coopère en outre avec ledit dispositif de stockage de données de modèle géospatial pour :

fenêtrer (190') des données dans le domaine spatial de modèle géospatial pour définir une pluralité d'ensembles de données dans le domaine spatial de modèle géospatial fenêtrés ; et
transformer (191') les ensembles de données dans le domaine spatial de modèle géospatial fenêtrés en la pluralité d'ensembles de données dans le domaine fréquentiel de modèle géospatial.

3. Système de modélisation géospatiale selon la revendication 1, dans lequel ledit processeur transforme (193') l'ensemble de données dans le domaine fréquentiel de modèle géospatial reconstruit en un ensemble de données dans le domaine spatial de modèle géospatial reconstruit.

4. Système de modélisation géospatiale selon la revendication 1, dans lequel l'au moins un ensemble de données dans le domaine fréquentiel de modèle géospatial comprend des données de radar à synthèse d'ouverture (SAR).

5. Système de modélisation géospatiale selon la revendication 1, dans lequel l'au moins un ensemble de données dans le domaine fréquentiel de modèle géospatial comprend des données dans l'espace des k.

6. Procédé de modélisation géospatiale comprenant :

la décomposition en ondelettes (181, 181') d'au moins un ensemble de données dans le domaine fréquentiel de modèle géospatial ayant au moins un vide dans celui-ci pour définir une pluralité de versions mises à l'échelle de l'ensemble de données dans le domaine fréquentiel de modèle géospatial,
la retouche de données (182, 182') dans l'au moins un vide pour définir une pluralité de versions mises à l'échelle retouchées de l'ensemble de données dans le domaine fréquentiel de modèle géospatial, et
la reconstruction (183, 183') de la pluralité de versions mises à l'échelle retouchées de l'ensemble de données dans le domaine fréquentiel de modèle géospatial en un ensemble de données dans le domaine fréquentiel de modèle géospatial reconstruit.

7. Procédé selon la revendication 6, dans lequel l'au moins un ensemble de données dans le domaine fréquentiel de modèle géospatial comprend une pluralité de celui-ci ; et dans lequel le procédé comprend en outre :

le fenêtrage (190') de données dans le domaine spatial de modèle géospatial pour définir une pluralité d'ensembles de données dans le domaine spatial de modèle géospatial fenêtrés ; et
la transformation (191') des ensembles de données dans le domaine spatial de modèle géospatial fenêtrés en la pluralité d'ensembles de données dans le domaine fréquentiel de modèle géospatial.

8. Procédé selon la revendication 6, comprenant en outre la transformation (193') de l'ensemble de données dans le domaine fréquentiel de modèle géospatial reconstruit en un ensemble de données dans le domaine spatial de modèle géospatial reconstruit.

9. Procédé selon la revendication 6, dans lequel l'au moins un ensemble de données dans le domaine fréquentiel de modèle géospatial comprend des données de radar à synthèse d'ouverture (SAR).

10. Procédé selon la revendication 6, dans lequel l'au moins un ensemble de données dans le domaine fréquentiel de modèle géospatial comprend des données dans l'espace des k.

FIG. 1

FIG. 2A

FIG. 2B

**FIG.3A**

**FIG.3B**

38

50

FIG. 4

50

FIG. 5A

55

FIG. 5B

FIG. 6

FIG. 7A

TOP LEFT

FIG. 7B

TOP RIGHT

FIG. 7C

BOTTOM LEFT

MIDDLE

BOTTOM RIGHT

FIG. 7D

FIG. 7E

EP 2 193 503 B1

FIG. 8A

90a

TOP LEFT

FIG. 8B

90b

TOP RIGHT

FIG. 8C

90c

BOTTOM LEFT

MIDDLE

BOTTOM RIGHT

FIG. 8D

90d

FIG. 8E

90e

EP 2 193 503 B1

FIG. 9

FIG. 10

FIG. 11

FIG. 12

FIG. 13

160 — START

161 — WINDOW GEOSPATIAL MODEL SPATIAL DOMAIN DATA TO DEFINE WINDOWED GEOSPATIAL MODEL SPATIAL DOMAIN DATA SETS

162 — TRANSFORM WINDOWED GEOSPATIAL MODEL DOMAIN DATA SETS TO DEFINE CORRESPONDING GEOSPATIAL MODEL FREQ. DOMAIN DATA SETS EACH HAVING A VOID(S) THEREIN

163 — INPAINT DATA INTO VOID(S) OF EACH GEOSPATIAL MODEL FREQ. DOMAIN DATA SET TO DEFINE INPAINTED GEOSPATIAL MODEL FREQ. DOMAIN DATA SETS

164 — RECONSTRUCT INPAINTED GEOSPATIAL MODEL FREQ. DOMAIN DATA SETS INTO OVERALL GEOSPATIAL MODEL FREQ. DOMAIN DATA SET

165 — FINISH

**FIG. 14**

160' — START

161' — WINDOW GEOSPATIAL MODEL DATA TO DEFINE WINDOWED GEOSPATIAL MODEL SPATIAL DOMAIN DATA SETS

162' — TRANSFORM WINDOWED GEOSPATIAL MODEL DOMAIN DATA SETS TO DEFINE CORRESPONDING GEOSPATIAL MODEL FREQ. DOMAIN DATA SETS EACH HAVING A VOID(S) THEREIN

163' — ITERATIVELY INPAINT DATA INTO VOID(S) OF EACH GEOSPATIAL MODEL FREQ. DOMAIN DATA SET BY PROPAGATING CONTOUR DATA (E.G., PHASE, AMPLITUDE) FROM OUTSIDE EACH VOID(S) ALONG A DIRECTION OF LINES OF CONSTANT CONTOUR INTO EACH VOID(S)

166' — INPAINTING COMPLETE ?   NO

YES

164' — RECONSTRUCT INPAINTED GEOSPATIAL MODEL FREQ. DOMAIN DATA SETS INTO OVERALL GEOSPATIAL MODEL FREQ. DOMAIN DATA SET

167' — TRANSFORM OVERALL GEOSPATIAL MODEL FREQ. DOMAIN DATA SET INTO OVERALL RECONSTRUCTED GEOSPATIAL MODEL SPATIAL DOMAIN DATA SET

168' — DISPLAY OVERALL RECONSTRUCTED GEOSPATIAL MODEL SPATIAL DOMAIN DATA SET

165' — FINISH

**FIG. 15**

```
                    ┌─────────────┐
                    │    START    │────── 180
                    └──────┬──────┘
                           │
                           ▼
         ┌─────────────────────────────────┐
         │  WAVELET DECOMPOSE GEOSPATIAL    │
         │  FREQ. DOMAIN DATA SET(S) HAVING │───── 181
         │  VOID(S) THEREIN TO DEFINE SCALED│
         │  VERSION OF GEOSPATIAL MODEL     │
         │  FREQUENCY DOMAIN DATA SET       │
         └─────────────────┬───────────────┘
                           │
                           ▼
         ┌─────────────────────────────────┐
         │  INPAINT DATA INTO VOID(S) TO    │
         │  DEFINE INPAINTED SCALED         │───── 182
         │  VERSIONS OF GEOSPATIAL MODEL    │
         │  FREQ. DOMAIN DATA SET           │
         └─────────────────┬───────────────┘
                           │
                           ▼
         ┌─────────────────────────────────┐
         │  RECONSTRUCT INPAINTED SCALED    │
         │  VERSIONS OF GEOSPATIAL MODEL    │
         │  FREQ. DOMAIN DATA SET INTO      │───── 183
         │  RECONSTRUCTED GEOSPATIAL MODEL  │
         │  FREQ. DOMAIN DATA SET           │
         └─────────────────┬───────────────┘
                           │
                           ▼
                    ┌─────────────┐
                    │   FINISH    │────── 184
                    └─────────────┘
```

FIG. 16

FIG. 17

START — 200

SELECT/TRANSFORM REFERENCE SAMPLE OF GEOSPATIAL MODEL FREQ. DATA SET INTO CORRESPONDING REFERENCE SAMPLE GEOSPATIAL MODEL SPATIAL DOMAIN DATA SET — 201

ITERATIVELY INPAINT DATA INTO VOID(S) OF GEOSPATIAL MODEL FREQ. DATA SET TO GENERATE INPAINTED GEOSPATIAL MODEL FREQ. DOMAIN DATA SET — 202

SELECT/TRANSFORM TEST SAMPLE OF INPAINTED GEOSPATIAL MODEL FREQ. DOMAIN DATA SET INTO CORRESPONDING TEST SAMPLE GEOSPATIAL MODEL SPATIAL DOMAIN DATA SET — 203

COMPARE REFRENCE SAMPLE AND TEST SAMPLE — 204

NO

INPAINTING COMPLETE? — 205

YES

FINISH — 206

FIG. 18

200' — START

201' — SELECT/TRANSFORM REFERENCE SAMPLE OF GEOSPATIAL MODEL FREQ. DATA SET INTO CORRESPONDING REFERENCE SAMPLE GEOSPATIAL MODEL SPATIAL DOMAIN DATA SET

202' — ITERATIVELY INPAINT DATA INTO VOID(S) OF GEOSPATIAL MODEL FREQ. DATA SET TO GENERATE INPAINTED GEOSPATIAL MODEL FREQ. DOMAIN DATA SET BY PROPAGATING CONTOUR DATA (E.G., PHASE, AMPLITUDE) FROM OUTSIDE EACH VOID(S) ALONG A DIRECTION OF LINES OF CONSTANT CONTOUR INTO EACH VOID(S)

203' — SELECT/TRANSFORM TEST SAMPLE OF INPAINTED GEOSPATIAL MODEL FREQ. DOMAIN DATA SET INTO CORRESPONDING TEST SAMPLE GEOSPATIAL MODEL SPATIAL DOMAIN DATA SET

204' — COMPARE REFRENCE SAMPLE AND TEST SAMPLE

205' — INPAINTING COMPLETE?

NO

YES

210' — TRANSFORM INPAINTED GEOSPATIAL MODEL FREQ. DOMAIN DATA SET INTO RECONSTRUCTED GEOSPATIAL MODEL SPATIAL DOMAIN DATA SET

211' — DISPLAY RECONSTRUCTED GEOSPATIAL MODEL SPATIAL DOMAIN DATA SET

206' — FINISH

FIG. 19

START ⟶ 220

SELECT/TRANSFORM REFERENCE SAMPLE OF GEOSPATIAL MODEL FREQ. DATA SET INTO CORRESPONDING REFERENCE SAMPLE GEOSPATIAL MODEL SPATIAL DOMAIN DATA SET ⟶ 221

INPAINT DATA INTO VOID(S) OF GEOSPATIAL MODEL FREQ. DATA SET BASED UPON INITIAL SELECTED INPAINTING FUNCTION FROM AMONG A PLURALITY THEREOF ⟶ 222

SELECT/TRANSFORM TEST SAMPLE OF INPAINTED GEOSPATIAL MODEL FREQ. DOMAIN DATA SET INTO CORRESPONDING TEST SAMPLE GEOSPATIAL MODEL SPATIAL DOMAIN DATA SET ⟶ 223

COMPARE REFERENCE SAMPLE AND TEST SAMPLE ⟶ 224

NEW INPAINTING FUNCTION REQUIRED? ⟶ 225

YES

226 ⟶ INPAINT DATA INTO VOID(S) OF GEOSPATIAL MODEL FREQ. DATA SET BASED UPON NEWLY SELECTED INPAINTING FUNCTION

NO

FINISH ⟶ 227

*FIG. 20*

START — 220'

SELECT/TRANSFORM REFERENCE SAMPLE OF GEOSPATIAL MODEL FREQ. DATA SET INTO CORRESPONDING REFERENCE SAMPLE GEOSPATIAL MODEL SPATIAL DOMAIN DATA SET — 221'

ITERATIVELY INPAINT DATA INTO VOID(S) OF GEOSPATIAL MODEL FREQ. DATA SET BASED UPON INITIAL SELECTED INPAINTING FUNCTION (BOUNDARY GEOMETRIES, MODELS, ETC.) FROM AMONG A PLURALITY THEREOF BY PROPAGATING CONTOUR DATA (E.G., PHASE, AMPLITUDE) FROM OUTSIDE EACH VOID(S) ALONG A DIRECTION OF LINES OF CONSTANT CONTOUR INTO EACH VOID(S) — 222'

SELECT/TRANSFORM TEST SAMPLE OF INPAINTED GEOSPATIAL MODEL FREQ. DOMAIN DATA SET INTO CORRESPONDING TEST SAMPLE GEOSPATIAL MODEL SPATIAL DOMAIN DATA SET — 223'

COMPARE REFERENCE SAMPLE AND TEST SAMPLE — 224'

NEW INPAINTING FUNCTION REQUIRED (THRESHOLD SIMILARITY?)? — 225'

YES

NO

INPAINT DATA INTO VOID(S) OF GEOSPATIAL MODEL FREQ. DATA SET BASED UPON NEWLY SELECTED INPAINTING FUNCTION — 226'

TRANSFORM INPAINTED GEOSPATIAL MODEL FREQ. DOMAIN DATA SET INTO GEOSPATIAL MODEL SPATIAL DOMAIN DATA SET — 228'

DISPLAY GEOSPATIAL MODEL SPATIAL DOMAIN DATA SET — 229'

FINISH — 227'

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6654690 B, Rahmes
- US 6987520 B, Criminisi
- US 20080019571 A, Rahmes

**Non-patent literature cited in the description**

- **RAHMES et al.** Topography preserving, non-linear inpainting for autonomous bare earth Digital Elevation Model (DEM) reconstruction. *MAPPS/ASPRS 2006 Fall Conference,* 06 November 2006
- Image inpainting. **BERTALMIO et al.** SIGGRAPH 2000 Conference Proceedings. July 2000, 417-424
- **REIGBER et al.** Interference Suppression in Synthesized SAR Images. *IEEE Geoscience and Remote Sensing Letters,* January 2005, vol. 2 (1
- **BOSSER et al.** Reconstruction of sparse bandwidth by regularization method in SAR imagery. *2006 Conference on Radar,* April 2006, 342-349